(19) Europäisches Patentamt
European Patent Office
Office européen des brevets

(11) **EP 2 927 530 B1**

(12) **EUROPEAN PATENT SPECIFICATION**

(45) Date of publication and mention of the grant of the patent:
**19.09.2018   Bulletin 2018/38**

(51) Int Cl.:
***F16D 65/00*** *(2006.01)*

(21) Application number: **14163128.3**

(22) Date of filing: **02.04.2014**

(54) **Dynamic reduction of brake squeal**

Dynamische Verringerung von Bremsenquietschen

Réduction dynamique de grincement du frein

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **01.04.2014   IT MI20140574**

(43) Date of publication of application:
**07.10.2015   Bulletin 2015/41**

(73) Proprietor: **Soluzioni Ingegneria S.r.l.
23887 Olgiate Molgora (LC) (IT)**

(72) Inventors:
• **Pezzola, Marco Ezio
I-23873 Missaglia (LC) (IT)**

• **Leo, Elisabetta
I-23887 OLGIATE MOLGORA (LC) (IT)**

(74) Representative: **Pezzoli, Ennio et al
c/o Maccalli & Pezzoli S.r.l.
Via Settembrini 40
20124 Milano (IT)**

(56) References cited:
**EP-A1- 0 849 484          EP-A1- 0 874 173
DE-A1- 19 804 676        JP-A- H10 329 681
KR-A- 20030 009 605    US-A1- 2004 174 067**

**Description**

Technical field

The present disclosure relates to the field of vehicles. More specifically, this disclosure relates to brakes of vehicles.

Background art

Brakes are used in almost all vehicles for reducing their speed (and possibly stopping them) when it is necessary. With particular reference to wheeled vehicles, such as cars, the brakes (also known as wheel brakes) act on the wheels of the vehicles (or at least some of them) so as to contrast their rotation. Commonly, the (wheel) brakes are of frictional type, wherein the rotation of each wheel is contrasted by the friction of a rotating element (integral with the wheel) and a stationary element (substantially integral with a chassis of the vehicle) that are pushed one against the other; for example, in a disk brake this result is achieved by pushing pads against a disk (or rotor) rotating with the wheel by means of a calliper.

Sometimes noise, and particularly high-pitched noise (commonly referred to as brake squeal or chirp), is produced when the brakes are actuated (for example, as described in "An Investigative Overview of Automotive Disc Brake Noise, K. Brent Dunlap, Michael A. Riehle and Richard E. Longhouse, Delphi Chassis Systems, Brake Technology and ABS/TCS Systems (SP-1413)'. Although in most cases the brake squeal does not impair operation of the brakes, it is annoying to passengers of the vehicles, and it may be perceived as a malfunctioning of the brakes. Particularly, the brake squeal may be very irritating, especially when it occurs at relative high frequency wherein the human ear is most sensitive. The brake squeal is caused by self-exited vibrations of the brakes (such as at mutual contacts of their pads and disk), which vibrations are probably due to stick-slip phenomena (wherein the pads and the disk alternately stick to and slide over each other) or to sprag-slip phenomena (wherein the pads and the disk alternately deflect elastically). Generally, the brake squeal occurs during low pressure braking manoeuvres when the brakes are actuated with low pressure of the pads against the disk, since higher pressures substantially eliminate their vibrations.

Several design techniques may be implemented to reduce the brake squeal (for example, by properly selecting geometry, mass, stiffness and material of various components of the brakes); for this purpose, experimental and analytical analyses of the brakes may be performed (for example, as described in the above-mentioned document by Brent Dunlap et al.). Moreover, considerable effort to reduce the brake squeal is also performed after the design of the brakes has been finalized; in this case, acoustical insulators (or dampers) may be added to the brakes, with their selection that may be based on simulations in dynamometers, on eigenvalue analyses or on modal analyses (for example, as described in "Reduction of squeal noise from disc brake systems using constrained layer damping, M. Triches Jr; S. N. Y. Gerges; R. Jordan, Journal of the Brazilian Society of Mechanical Sciences and Engineering, Print version ISSN 1678-5878, J. Braz. Soc. Mech. Sci. & Eng. vol.26 no.3 Rio de Janeiro July/Sept. 2004. Moreover, different treatments may be applied on the field to the brakes already mounted on the vehicles, in an attempt to reduce the brake squeal when corresponding complaints are raised (especially during a warranty period of the vehicles); generally, in this case simple empirical techniques are applied (for example, by chamfering, greasing or gluing contacts, bonding dampers, adding shims).

The above-mentioned techniques are time-consuming and costly; moreover, these techniques are not completely satisfactory, so that they often require an iterative process with repeated refinements.

In any case, the available techniques are ineffective to cope with brake squeals that may be due to contingent situations. For example, this may happen when weather conditions change (such as temperature and humidity) or when dust contaminates the brakes; moreover, the brake squeals may only occur in specific operative conditions (for example, at dawn because of dew, during the first kilometres of travel because of lower operative temperature). The available techniques are also ineffective to cope with intrinsic changes of the brakes over time (for example, due to wear, aging, plastic deformations).

All of the above may have a detrimental effect on the customer satisfaction, which may result in a low quality perception of the brakes (and then of the whole vehicles).

Moreover, EP-A-0849484 discloses a vibration damper that detects vibrations of brake pads and vibrates the pads in such a way as to damp the vibrations detected, wherein (based on a detected signal) transfer functions for a control circuit are adjusted to suppress vibrations having squealing frequencies.

EP-A-0874173 discloses a vibration damper which can suppress squeals of a brake, wherein an actuator circuit for actuating the vibration detector and vibrator is connected to a car battery through switches that are closed only if a brake switch is detecting that the brake is being applied and a vehicle stop detector is detecting that the vehicle is not moving.

JP-A-H10329681 discloses a technique wherein generation of brake squeal is prevented by changing hydraulic braking force and total braking force is kept constant by changing regenerative braking force so as to compensate the change of hydraulic braking force.

KR-A-20030009605 discloses monitoring squeal noise-generating conditions from a brake-working sensor, a vehicle speed sensor, a hydraulic sensor and a temperature sensor and deciding squeal noise-generating condition if the same condition reappears.

US-A-2004/174067 discloses a brake squeal control device, which carries out squeal control by specifying travel state and temperature conditions in which brake noise tends to be produced,

Summary

A simplified summary of the present disclosure is herein presented in order to provide a basic understanding thereof; however, the sole purpose of this summary is to introduce some concepts of the disclosure in a simplified form as a prelude to its following more detailed description, and it is not to be interpreted as an identification of its key elements nor as a delineation of its scope.

In general terms, the present disclosure is based on the idea of coping with the brake squeal dynamically.

Particularly, an aspect provides a method for reducing a brake squeal, wherein at least one vibration signal indicative of a vibration of a brake is monitored to detect at least one squeal condition indicative of the brake squeal, and at least one corrective action for reducing the brake squeal is triggered in response thereto.

A further aspect provides a computer program for implementing the method (and a corresponding computer program product).

A further aspect provides a corresponding system.

Brief description of the drawings

The solution of the present disclosure, as well as further features and the advantages thereof, will be best understood with reference to the following detailed description thereof, given purely by way of a non-restrictive indication, to be read in conjunction with the accompanying drawings (wherein, for the sake of simplicity, corresponding elements are denoted with equal or similar references and their explanation is not repeated, and the name of each entity is generally used to denote both its type and its attributes - such as value, content and representation). In this respect, it is expressly intended that the figures are not necessary drawn to scale (with some details that may be exaggerated and/or simplified) and that, unless otherwise indicated, they are merely used to conceptually illustrate the structures and procedures described herein. Particularly:

FIG.1 shows a pictorial representation of a portion of a vehicle wherein the solution according to an embodiment of the present disclosure may be applied,
FIG.2 shows exemplary diagrams relating to a break squeal,
FIG.3A-FIG.3C show exemplary diagrams relating to different noises,
FIG.4 shows an explanatory diagram relating to the use of energy harvesting techniques according to an embodiment of the present disclosure,
FIG.5 shows a principle block diagram of the main components of a system for reducing brake squeal based on energy harvesting techniques according to an embodiment of the present disclosure,
FIG.6 shows a principle block diagram of the main components of a system for reducing brake squeal based on dissipative and/or beating techniques according to an embodiment of the present disclosure,
FIG.7 shows the main software components that may be used to implement the solution according to an embodiment of the present disclosure, and
FIG.8A-FIG.8B show an activity diagram describing the flow of activities relating to an implementation of the solution according to an embodiment of the present disclosure.

Detailed description

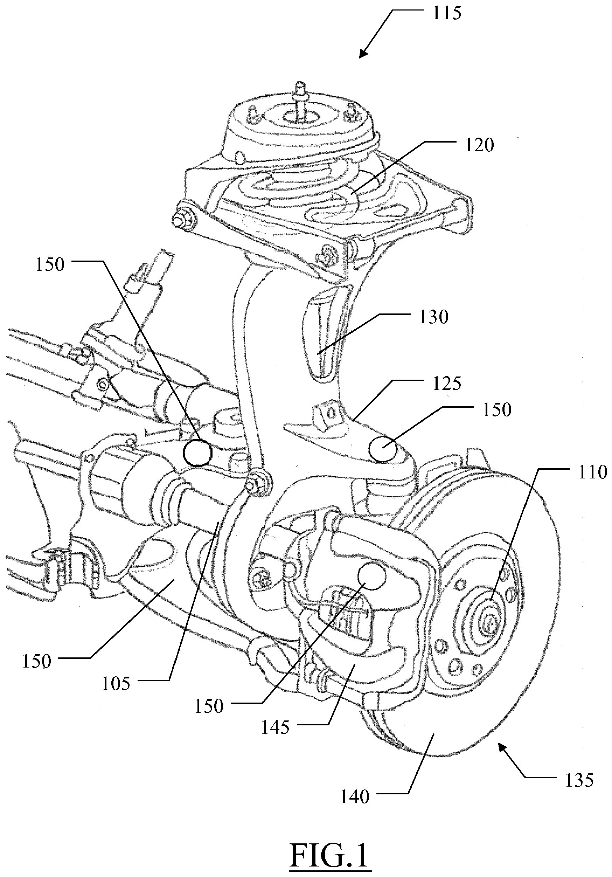

With reference in particular to the FIG.1, a pictorial representation is shown of a portion of a vehicle wherein the solution according to an embodiment of the present disclosure may be applied.

More specifically, the vehicle (in this specific example, a car) comprises a driving axle 105, which is used to transmit a torque to a wheel (not shown in the figure); the driving axle 105 ends with a hub carrier 110 for mounting the wheel.

A suspension 115 elastically connects the wheel to a chassis (not shown in the figure), at the same time allowing its motion (*i.e.,* to rotate and possibly to steer). The suspension 115 comprises a spring 120 and a set of linkages 130, which ensure a relative movement between the wheel and the chassis (with the linkages 130 that may comprise a steering tie-rod, not shown in the figure, in case of a steering wheel). The spring 120 is associated with a shock absorber 130 (for example, of pneumatic type), which smoothes the movement of the chassis with respect to the wheel and damps its oscillations.

A brake 135 (for example, of disk type) is coupled with the wheel (for reducing its speed when it is necessary). The brake 135 comprises a disk 140 (for example, of cast iron), which is mounted on the driving axle 105, inside the hub carrier 110 (so as to rotate with the wheel). A calliper 145 is instead mounted on the suspension 115 (so as to be substantially stationary with respect to the chassis). The calliper 145 houses one or more (brake) pads and one or more pistons coupled with a hydraulic circuit (not shown in the figure) for acting on the disk 140. The calliper 145 may be either fixed (*i.e.,* it does not move with respect to the disk 140) or floating (*i.e.,* it may slide in parallel to a rotation axis of the disk 140); in any case, the pistons push the pads against the disk 140. The pads (for example, of ceramics) are designed for generating high friction with the disk 140 (at the same time wearing evenly).

In the solution according to an embodiment of the present disclosure, as described in detail in the following, one or more peripherals 150 are added. The peripherals 150 comprise one or more sensors and one or more actuators (both of them denoted with the same reference). Particularly, the sensors 150 measure corresponding vibration signals that are indicative of a vibration of the brake 135 (for example, with the sensors 150 that are mounted on the brake 135 to measure its vibration directly or on another structure to measure its vibration comprising a contribution due to the vibration of the brake 135); the vibration signals are monitored to detect one or more squeal conditions indicative of a squeal of the brake 135. One or more corrective actions (based on harvesting, dissipative or beating techniques) are triggered (by enabling corresponding actuators 150) for reducing the brake squeal in response to the detection of the squeal conditions.

This allows coping with the brake squeals dynamically, substantially in real-time as soon as they occur.

Particularly, this allows reducing brake squeals that may be due to contingent situations, for example, when weather conditions (such as temperature and humidity) change or when dust contaminates the brakes; it also allows reducing brake squeals that only occur in specific operative conditions (for example, at dawn because of dew, during the first kilometres of travel because of lower operative temperature). Moreover, the same techniques may be effective in reducing brake squeals due to intrinsic changes of the brakes over time (for example, wear, aging, plastic deformations).

This has a beneficial effect on the customer satisfaction, which may result in a higher quality perception of the brakes (and then of the whole vehicle).

In a specific implementation, the peripherals 150 may be arranged on the brake 135; for example, the peripherals 150 may be applied to the calliper 145 (whereas it is preferable to avoid the disk 140 and the pads because they are consumption material that are replaced over time, they reach very high working temperature, up to 1.000 °C, and for the disk 140 it rotates at high speed). The arrangement of the peripherals 150 on the brake 135 increases their performance, and particularly their sensitivity for the sensors and their effectiveness for the actuators, since the vibrations are measured and the corrective actions are applied, respectively, directly where the brake squeals originate (at the cost of a higher complexity because of the need of thermally insulating the peripherals 150 from the calliper 145 that may reach relatively high working temperature, of the order of 500 °C).

In addition or in alternative, the peripherals 150 may be arranged on the suspension 115, since the vibration propagates from the brake 135 to the suspension 115 (for the sensors) and the corrective action propagates from the suspension 115 to the brake 135 (for the actuators); for example, the peripherals 150 may be applied to the linkages 125. The arrangement of the peripherals 150 on the suspension 115 simplifies their application, since the suspension 115 is readily accessible, is protected from atmospheric agents (such as rain and snow) and remains at relatively low temperature (with the lower performance caused by the above-mentioned propagation that is negligible in practice).

Modal analysis techniques (studying the dynamic response of structures under vibrational excitations) may be applied to select the positions of the peripherals 150. Particularly, normal modes are determined of a structure comprising the brake 135 and the suspension 115, also taking into account forces depending on tyre-road contacts (*i.e.,* motion patterns of its points when they all move sinusoidally over time at a same frequency and with a fixed phase relation). Each normal mode is defined by its (modal or resonance) frequency and mode shape (identified by the number of half-waves in the vibration and defined by a displacement factor of each point); the points wherein the mode shape is null (and then no displacement occurs) define nodes of the normal mode. The peripherals 150 may then be placed at positions far away from the nodes of the main normal modes, so as to exhibit a high modal participation to the vibration of the structure (*i.e.*, high value of the mode shape and then of their displacement). In this way, it is possible to increase the performance of the peripherals 150, and particularly their sensitivity when operating as sensors and their effectiveness when operating as actuators.

In a specific implementation, the peripherals 150 may have a redundant structure with a plurality of peripherals 150 operating as sensors and a plurality of peripherals 150 operating as actuators (for example, 2-5 each). This increases the reliability (since it allows tolerating the failure of some peripherals 150), the accuracy (in the detection of the squeal conditions) and the effectiveness (of the corrective actions).

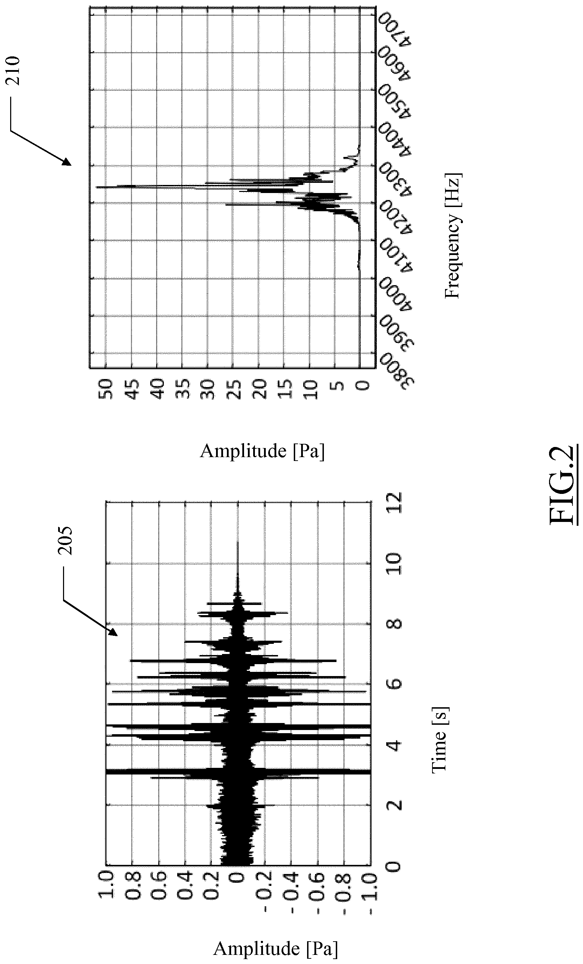

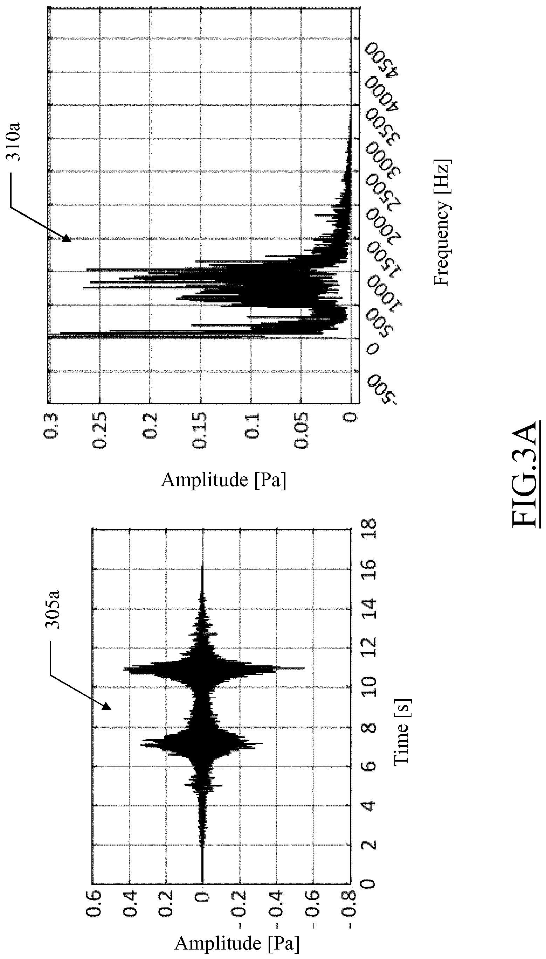

Moving to the FIG.2, exemplary diagrams are shown relating to a break squeal; in the FIG.3A-FIG.3C, instead, exemplary diagrams are shown relating to other noises (different from the break squeal).

For this purpose, the figures shown typical patterns of an acoustic wave corresponding to the different types of noise. Particularly, each figure shows the acoustic wave in the time domain by a curve (denoted with the reference 205 for the brake squeal and with the reference 305 followed by the suffix of the figure otherwise) that plots the amplitude of the acoustic wave (in [Pa] on the ordinate axis) against the time (in [s] on the abscissa axis). The figure also shows the acoustic wave in the frequency domain by a curve (denoted with the reference 210 for the brake squeal and with the reference 310 followed by the suffix of the figure otherwise) that plots the amplitude of the acoustic wave (in [Pa] on the ordinate axis) against the frequency (in [Hz] on the abscissa axis); this curve defines a frequency spectrum of the acoustic wave that represents a distribution of its frequency components.

Starting from the FIG.2, the curve 205 and the curve 210 show the typical pattern in the time-domain and in the frequency-domain, respectively, of a brake squeal; particularly, the curves 205 and 210 relate to a breaking manoeuvre during which the brake has been repeatedly actuated and released. In this case, the frequency spectrum (curve 210) has a high and narrow peak at high frequency (*i.e.,* about 4.25 kHz).

Moving to the FIG.3A, the curve 305a and the curve 310a show the typical pattern in the time-domain and in the frequency-domain, respectively, of urban traffic. In this case, the frequency spectrum (curve 310a) is relatively flat with very low peaks.

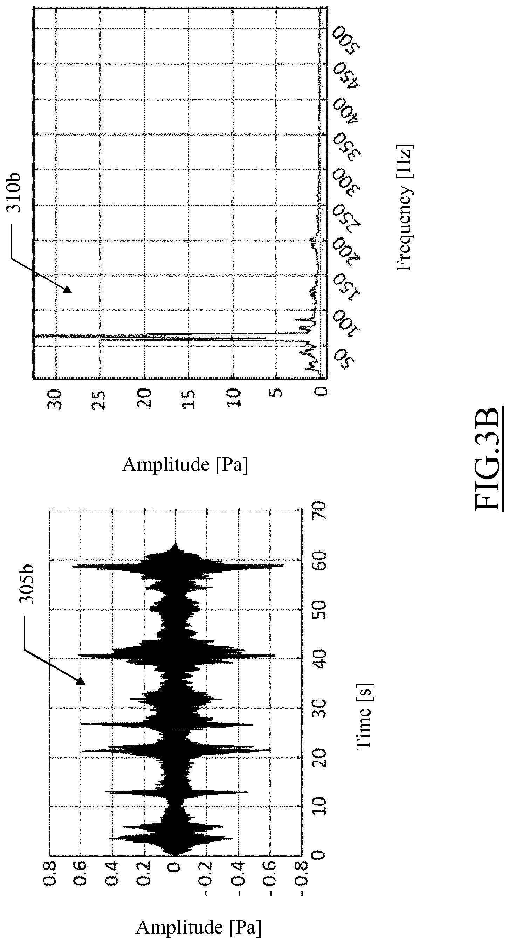

Moving to the FIG.3B, the curve 305b and the curve 310b show the typical pattern in the time-domain and in the frequency-domain, respectively, of highway traffic. In this case, the frequency spectrum (curve 310b) has a peak at very low frequency (*i.e.,* about 60 Hz).

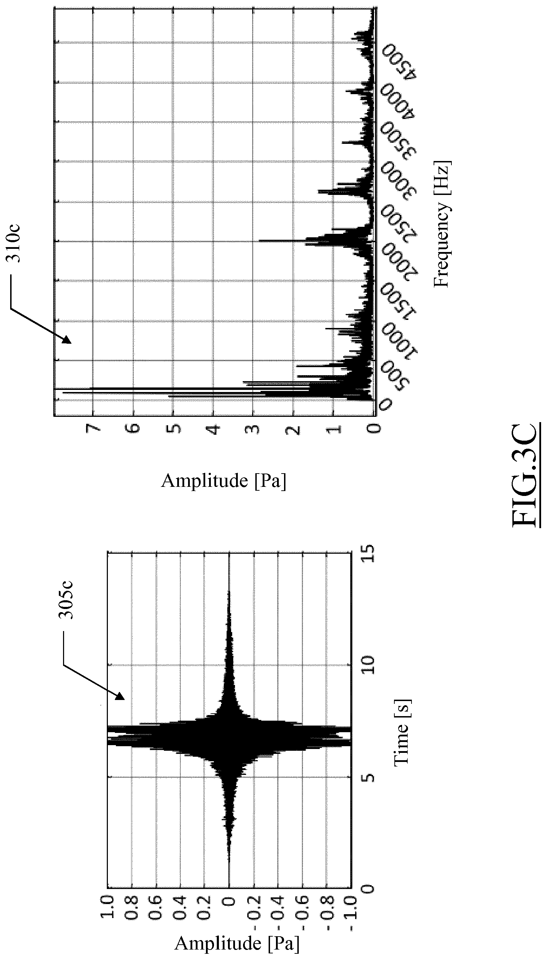

Moving to the FIG.3C, the curve 305c and the curve 310c show the typical pattern in the time-domain and in the frequency-domain, respectively, of a passing train. In this case, the frequency spectrum (curve 310c) has a main peak at very low frequency (*i.e.,* about 100 Hz), whereas secondary peaks at higher frequencies are low and wide.

The above-mentioned differences may be used to discriminate the brake squeals from other noises with an analysis in the frequency domain of the vibration signal that is measured by each sensor; for example, a brake squeal may be detected when a high and narrow peak at high frequency is found in the frequency spectrum of the vibration signal.

In response to the detection of each squeal condition, the reduction of the corresponding brake squeal may be implemented in different ways.

Particularly, in a basic implementation the same (static) corrective action is performed in response to the detection of every squeal condition. In this case, the corrective action may be targeted (as described in the following) to a pre-defined frequency of a specific brake squeal that is known *a priori* (for example, for a corresponding model of vehicle).

This implementation allows reducing brake squeals that are repeatable over time.

However, advantageously the corrective action is set dynamically according to each squeal condition. In this case, the corrective action may be targeted (as described in the following) to the frequency of the vibration signal that caused the detection of the squeal condition.

This implementation is very effective in reducing brake squeals that vary, in terms of either intensity or frequency, with contingent situations (for example, weather conditions or dust contaminations), with specific operative conditions (for example, at dawn or during the first kilometres of travel) and with intrinsic changes of the brakes over time (for example, wear, aging, plastic deformations).

In this way, it is also possible to develop a general-purpose system for reducing brake squeal that may be used on different vehicles (with the possibility of its mass-production at reduced costs).

In both cases, the (static or dynamic) corrective action that is triggered in response to the detection of the squeal condition may be of different types. Particularly, the corrective action may be either acted upon by or acting on the vibration that caused the brake squeal. Corrective actions acted upon by the vibration that caused the break squeal may be based on energy harvesting (or scavenging) techniques. Energy harvesting is the process of extracting energy from sources that are freely available as a background in the surrounding environmental (for example, vibrations, electromagnetic waves, thermal gradients); energy harvesting has been developed mainly for supplying small devices that require very low power (for example, of the order of a few [mW]) in specific applications (for example, when they are inaccessible). In this case, instead, the extraction of energy from the structure is mainly used to damp its vibration (with a corresponding reduction of the brake squeal). For example, the mechanical energy associated with the vibration of the structure is converted into electrical energy by a corresponding harvesting circuit (described in the following). This harvesting circuit may be tuned to optimise (at least in part) the extraction of the energy from the structure, and then its damping.

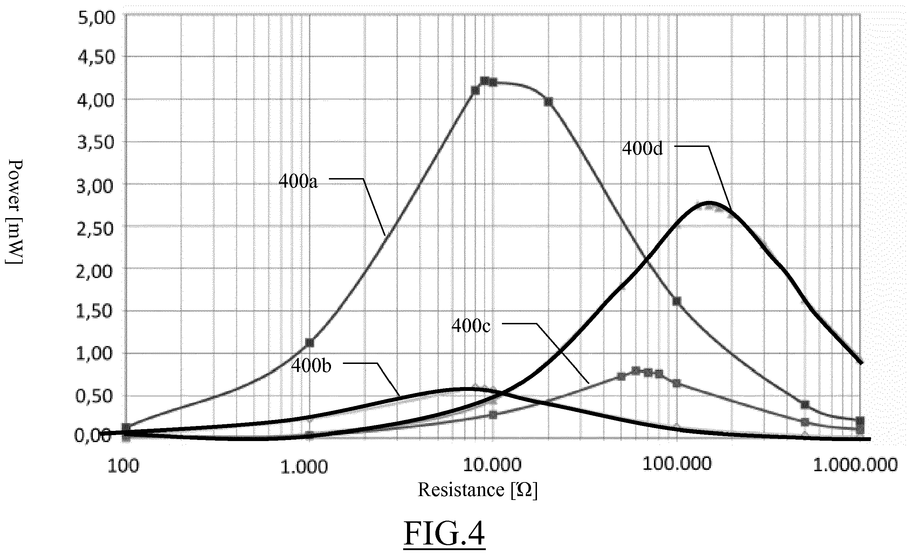

Moving to the FIG.4, an explanatory diagram is shown relating to the use of energy harvesting techniques according to an embodiment of the present disclosure.

Particularly, the figure shows different curves 400a, 400b, 400c and 400d, each one plotting the power that is extracted from a generic structure (in [mW] on the abscissa axis) against the resistance of a load resistor of the harvesting circuit (in [Ω] on the abscissa axis) for different vibration frequencies of the structure.

As can be seen, in all cases (curves 400a-400d) the power extraction is negligible when the resistance is very low. The power extraction increases with the resistance up to an optimal value thereof (providing the maximum power extraction). As the resistance exceeds its optimal value, the power extraction decreases again.

Moreover, the power extraction also changes with the vibration frequency of the structure. Indeed, the power extraction is maximum (curve 400a) when the structure vibrates at the resonance frequency of the actuators that convert the mechanical energy into an electrical signal for the harvesting circuit (as described in the following), whereas it reduces at different vibration frequencies of the structure (curves 400b-400d). However, the power extraction may be increased even at vibration frequencies of the structure different from the resonance frequency of the actuators by matching an impedance (*i.e.,* capacitance and/or inductance) of the harvesting circuit accordingly (for example, as described in "Energy Harvesting Technologies, ISBN 978-0-387-76463-4"). For example, the impedance of the harvesting circuit may be calculated by setting its resonance frequency equal to the vibration frequency of the structure:

$$f = \frac{1}{2\pi\sqrt{LC}},$$

wherein *f* is the vibration frequency, *L* is the inductance of the harvesting circuit and C is the capacitance of the harvesting circuit.

Therefore, the harvesting circuit may be configured so as to tune its impedance according to the frequency of the brake squeal (either pre-defined statically or preferably detected dynamically). For example, it is possible to have a single sensor that detects the squeal condition, and multiple actuators that are all tuned according to the same frequency of the brake squeal that is detected by the sensor.

The above-mentioned implementation is quite effective; moreover, it allows recovering (at least in part) the energy associated with the brake squeal.

Moreover, the same harvesting circuit may also be used in the same way to convert mechanical energy associated with any other vibration of the structure (even when no brake squeal is present) into electrical energy; for example, this may be applied to relatively persistent vibrations, that are characterized by a deterministic harmonic contribute (for example, in case of local structural resonance excited by tyre-road contacts).

With reference instead to corrective actions acting on the vibration that caused the break squeal, the actuators cause the brake to vibrate (either directly or through another structure that transmits its vibration in part to the brake) so as to reduce the brake squeal.

For example, an embodiment of the present disclosure is based on dissipative techniques. In this case, the brake is caused to vibrate at the same squeal frequency so as to increase a damping thereof. For example, the simplified dynamic equation (with one degree of freedom) of the relevant point of the brake (where the brake squeal originates) is:

$$F(t)=m\cdot x''(t)+r\cdot x'(t)+k\cdot x(t),$$

wherein *x(t)* is the displacement of the brake over time (*t*) defining its vibration, *k* is the stiffness of the brake, *x'(t)* is the first derivative of the displacement of the brake with respect to the time defining its velocity, *r* is the damping coefficient of the brake, *x"(t)* is the second derivative of the displacement of the brake with respect to the time defining its acceleration, *m* is the inertial mass of the brake and *F(t)* is the force applied to the brake over time. Aiming at reducing the damping of the brake *(i.e.,* the derivative term of the equation), the force applied to the brake may be expressed as:

$$F(t)=G\cdot e(t)=G(v_{ref}-x'(t))=G(0-x'(t))=-G\cdot x'(t),$$

wherein *G* is a gain of a derivative control of the brake, and *e(t)* is an error over time of the (actual) velocity *x'(t)* with respect to a target value thereof $v_{ref}$=0. Therefore, the desired vibration of the brake (indicated as target vibration) may be obtained by solving the following differential equation:

$$-G\cdot x'(t)=m\cdot x''(t)+r\cdot x'(t)+k\cdot x(t) \rightarrow m\cdot x''(t)+(G+r)\cdot x'(t)+k\cdot x(t)=0.$$

Each actuator is then driven so as to cause a vibration of the point where it is applied (indicated as induced vibration) that causes this target vibration of the brake. The induced vibration is equal to the target vibration, suitably scaled and delayed according to its distance from a corresponding sensor that detected the brake squeal and from the brake. For this purpose, a frequency response function of the structure (measuring its output spectrum in response to an input stimulus), and particularly a participation factor between each actuator and the corresponding sensor and between each actuator and the brake (indicating a ratio in intensity and phase between their frequency responses) may be exploited. For example, it is possible to have one or more pairs each one formed by a sensor and a corresponding actuator that is enabled accordingly when the sensor detects the squeal condition; in this case, it is preferable to arrange each actuator very close to the corresponding sensor (so as to facilitate their synchronization).

The above-mentioned implementation is quite affective (since it acts directly on the cause of the brake squeal).

In addition or in alternative, an embodiment of the present disclosure is based on beating techniques. Beating is the physical phenomenon caused by the interference of two (or more) acoustic waves with slightly different frequencies; the two acoustic waves are perceived as a resulting acoustic wave (equal to the envelope of their sum) with variable intensity and a frequency equal to the difference between the frequencies of the two acoustic waves. Indeed, starting from a condition wherein the two acoustic waves are out-of-phase, they interfere destructively with the maxima of one acoustic wave that compensate (down to cancel completely) the minima of the other one. As the phase of the two acoustic waves changes, they start interfering constructively so that the intensity of the resulting acoustic wave increases. The constructive interference of the two acoustic waves completes when they become in-phase with their maxima and minima that sum up. The process is then inverted with the intensity of the resulting acoustic wave that decreases until the two acoustic waves return out-of-phase again, after a time depending on the frequency difference of the two acoustic waves.

In this case, the actuators cause the structure where they are applied to vibrate so as to generate a beating acoustic wave, with a frequency that is slightly different from the one of a squeal acoustic wave corresponding to the brake squeal. The resulting acoustic wave then has a frequency that is lower in magnitude and characterized by lower harmonic contribute (the lower the harmonic contribute, the lower the energy, since the energy is proportional to the square of the frequency), and then hardly audible by the human ear. In this way, the brake squeal is disturbed so as to be mystified (at least in part).

Therefore, the corrective action may be configured to tune the frequency of the beating acoustic wave according to the frequency of the brake squeal (either pre-defined statically or preferably detected dynamically). For example, it is possible to have a single sensor that detects the squeal condition, and multiple actuators that are all tuned according to the same frequency of the brake squeal that is detected by the sensor.

The above-mentioned implementation is quite simple (since the phase of the beating acoustic wave with respect to the squeal acoustic wave may be random without any effect on the reduction of the brake squeal); moreover, the desired result may be achieved with the consumption of relatively low energy with respect to the one associated with the brake squeal (since it is not necessary to cancel the vibration that caused the brake squeal).

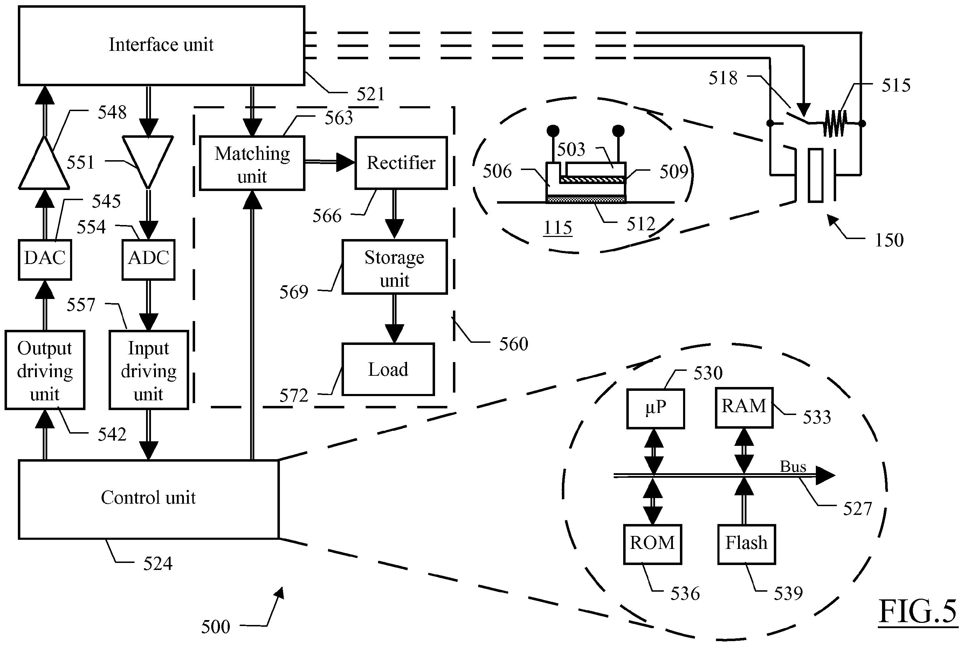

Moving to the FIG.5, a principle block diagram is shown of the main components of a system 500 for reducing brake squeal based on energy harvesting techniques according to an embodiment of the present disclosure.

In this case, each peripheral 150 comprises a piezoelectric module. The piezoelectric module 150 may operate as a sensor. Indeed, when the structure (for example, the suspension) on which the piezoelectric module 150 is applied vibrates, the piezoelectric module 150 is deformed thereby varying an electric charge stored therein; therefore, by measuring a voltage corresponding to a current supplied by the electric charge of the piezoelectric module 150 it is possible to quantify the vibration of the structure. On the other hand, the piezoelectric module 150 may operate as actuator. Indeed, when an electric field is applied to the piezoelectric module 150 it changes thickness and/or length; therefore, by providing a variable voltage to the piezoelectric module 150 it is possible to cause its vibration that is transmitted to the structure on which the piezoelectric module 150 is applied. The piezoelectric modules 150 are cost-effective, robust, in particular, against aggressive environment conditions, and hardly subject to malfunctions (and then reliable).

Preferably, one or more piezoelectric modules 150 are dedicated to operate as sensors, whereas one or more other piezoelectric modules 150 are dedicated to operate as actuators. Preferably, the sensors 150 are thinner to increase their sensitivity; on the contrary, the actuators 150 are thicker to increase their power. For example, the thickness of the actuators 150 may be equal to 1.5-5, preferably 1.7-3, and still more preferably 1.8-2.5, such as 2 times the thickness of the sensors 150 (with their actual thickness that may vary according to the type of vehicles and/or brake, for example, of the order of 0.3-0.7 mm for the sensors 150 and of the order of 0.6-1.4 mm for the actuators 150, in both cases over an extent of 100-400 mm$^2$). In this way, it is possible to optimise the piezoelectric modules 150 for the sensors and for the actuators independently according to the corresponding functions, thereby considerably enhancing their performance.

Particularly, each piezoelectric module 150 comprises two plates (or patches) 503 and 506 of electrically conductive material (for example, metal), between which a layer of piezoelectric material 509 (for example, double-biased quartz) is arranged; the plate 503 has an (upper) free surface that is directly accessible to define a terminal of the piezoelectric module 150, whereas the plate 506 is provided with an extension toward the plate 503 that defines another terminal of the piezoelectric module 150. The plate 506 is fastened to the corresponding structure (the suspension 115 in this case), for example, by gluing a (lower) free surface of the plate 506 directly thereon. For this purpose, a glue layer 512 is used, which glue layer 512 has characteristics so as not to interfere substantially with the interaction between the suspension 115 and the plate 506; for example, the glue layer 512 is made of a homogeneous epoxy glue and with a bandwidth complying with the frequencies at issue (for example, 0-20 kHz); preferably, the glue layer 512 is electrically insulating (so as to avoid any risks of over-voltages, for example, in case of lightning or stray currents across the suspension 115) and non-hygroscopic (so at to avoid its deterioration with moisture). A resistor 515 and an electronic switch 518 (for example, implemented with a MOS transistor having a control terminal that defines a further terminal of the piezoelectric module 150) are connected in series to each other, in parallel to the plates 503-506; normally, the switch 518 is closed so as to discharge the plates 503-506 (which are comparable to a capacitor that would tend to accumulate electric charge between its terminals due to unavoidable vibrations induced thereon); this maintains the voltage across the plates 503-506 at substantially zero value in a rest condition, thereby avoiding a saturation of the piezoelectric module 150.

Each piezoelectric module 150 is connected (via its terminals) to an interface unit 521 (through either dedicated wires or a common bus). The interface unit 521 is coupled with an Electronic Control Unit (ECU), or simply control unit, 524, which controls the piezoelectric modules 150 (as described in the following). The control unit 524 comprises various modules that are connected in parallel to a bus 527. In detail, a micro-processor 530 (or more) controls operation of the control unit 524, a RAM 533 is used as a working memory by the micro-processor 530, a ROM 536 contains base code for a bootstrap of the control unit 524, and a solid-state mass memory 539 (for example, a flash memory) stores data to be preserved even in the absence of power supply.

For all the piezoelectric modules 150, the control unit 524 controls an output driving unit 542, which provides digital signals to a digital-to-analog (DAC) converter 545; the converter 545 transmits corresponding analog signals to an amplifier 548, which amplifies and provides them to the interface unit 521 for their selective sending to the piezoelectric modules 150. Particularly, this is used to open the switch 518 of each piezoelectric module 150 to be enabled (either as sensor or as actuator) and to close it otherwise.

For the sensors 150, the interface unit 521 selectively transmits an (analog) voltage received from each one of them to an amplifier 551, which amplifies and provides it to an analog-to-digital (ADC) converter 554; the converter 554 transmits a corresponding digital signal (defining the vibration signal) to an input driving unit 557 that interfaces the control unit 524.

When the reduction of the brake squeals is based on energy harvesting techniques, the interface unit 521 transmits the (alternate) voltage supplied by each actuator 150 to a harvesting circuit 560. The harvesting circuit 560 comprises an (impedance) matching unit 563 for each actuator 150 (only one shown in the figure); each matching unit 563 is controlled (either individually or globally) by the control unit 524 so as to provide a programmable impedance, in terms of both resistance and capacitance and/or inductance (for example, based on variable resistors and variable capacitors controlled digitally and/or analogically). The matching units 563 are connected in series so as to provide a total voltage from the actuators 150 to a rectifier 566 (for example, based on a diode bridge), which converts it into a corresponding direct voltage. The rectifier 566 provides this direct voltage to an energy storage unit 569 (for example, based on a capacitor). The energy storage unit 569 in turn supplies a load 572; the load 572 may be of different types, for example, a simple resistor for dissipating energy as heat, a boost converter and a voltage regulator for supplying the control unit 524, or an alternator for charging a battery of the vehicle (not shown in the figure).

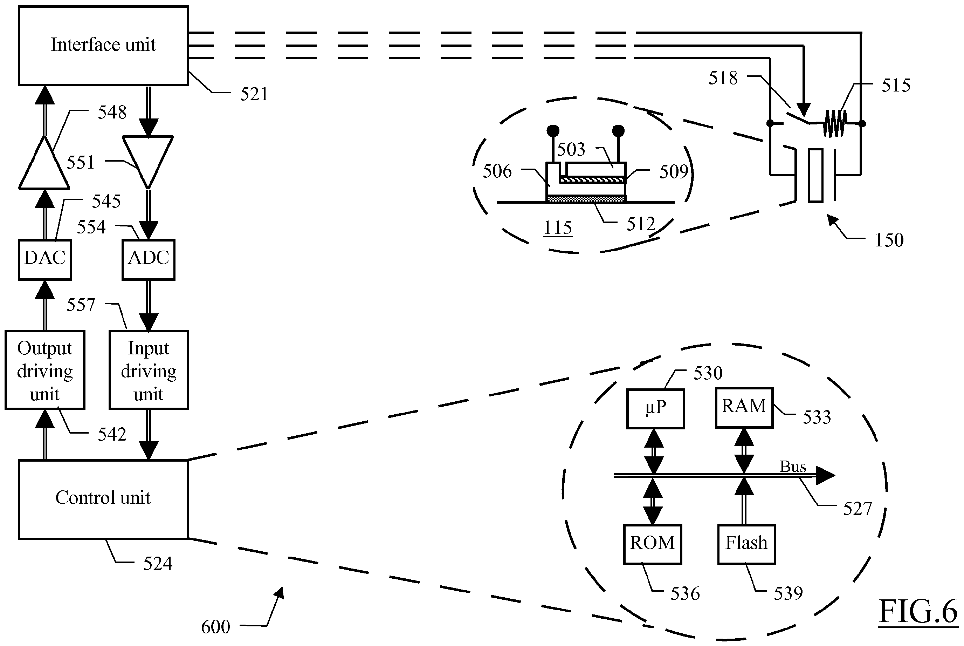

Moving to the FIG.6, a principle block diagram is shown of the main components of a system 600 for reducing brake squeal based on dissipative and/or beating techniques according to an embodiment of the present disclosure.

In this case, the system 600 is simplified since the harvesting circuit is not required any longer. The actuators 150 are now controlled by the same output driving unit 542, converter 545 and amplifier 548, so as to apply an alternate voltage that causes them to vibrate (for example, to damp the vibration of the brake or to provide the beating acoustic waves).

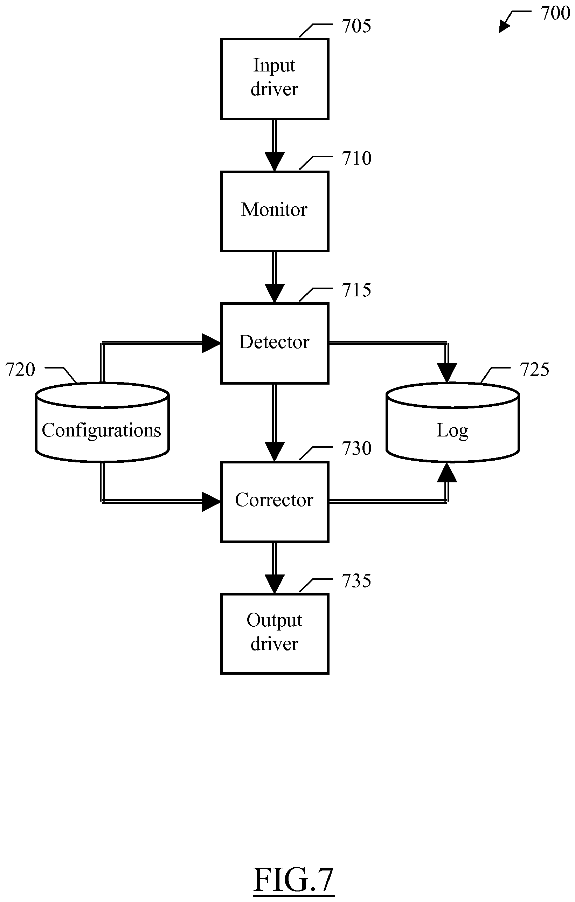

Moving to the FIG.7, the main software components are shown that may be used to implement the solution according to an embodiment of the present disclosure.

These software components are denoted as a whole with the reference 700. The information (programs and data) is typically stored in the mass memory and loaded (at least partially) into the working memory of the control unit when the programs are running. The programs are initially installed onto the mass memory, for example, from a (removable) solid-state memory card.

Particularly, an input driver 705 drives the sensors for measuring the corresponding vibration signals. The input driver 705 passes the measured vibration signals to a monitor 710, which continually monitors them. The monitor 710 interfaces a detector 715 that detects the squeal conditions according to the vibration signals. For this purpose, the detector 715 accesses a configuration repository 720 storing configuration information, and particularly configuration parameters for the detection of the squeal conditions (as described in the following); moreover, the detector 715 saves information about the detection of every squeal condition into a log repository 725 (for example, for diagnostic purposes). The detector 715 controls a corrector 730 that triggers corrective actions for reducing the brake squeal in response to the detection of the corresponding squeal conditions; the corrector 730 as well accesses the configuration repository 720 for extracting configuration parameters for the corrective actions (as described in the following) and the log repository 725 for saving information about every corrective actions (again for diagnostic purposes). The corrector 730 in turn controls an output driver 735 that drives any components implementing the corrective actions (i.e., the actuators and possibly the harvesting circuit).

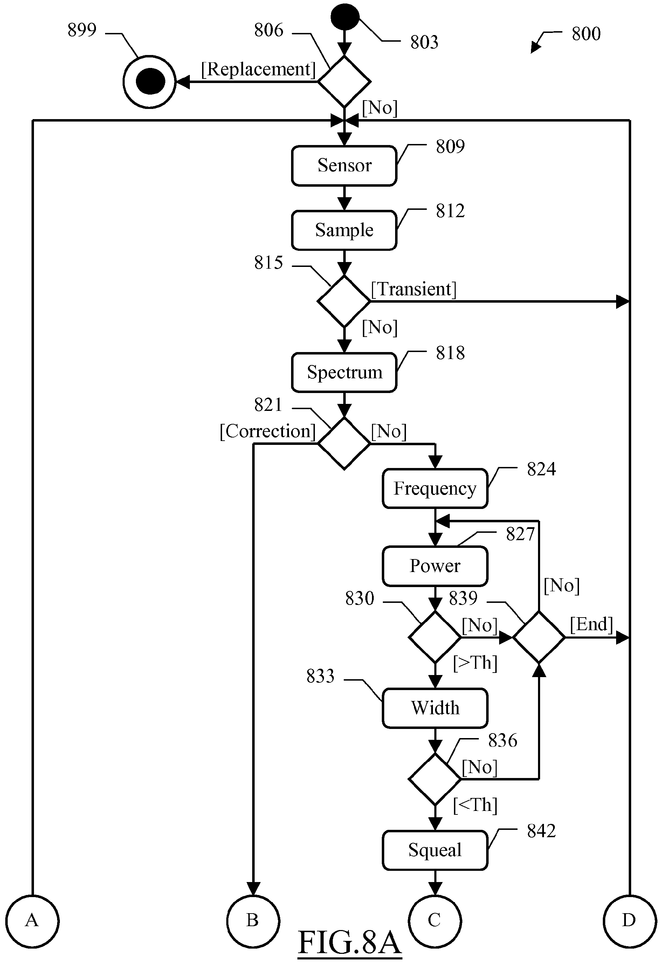

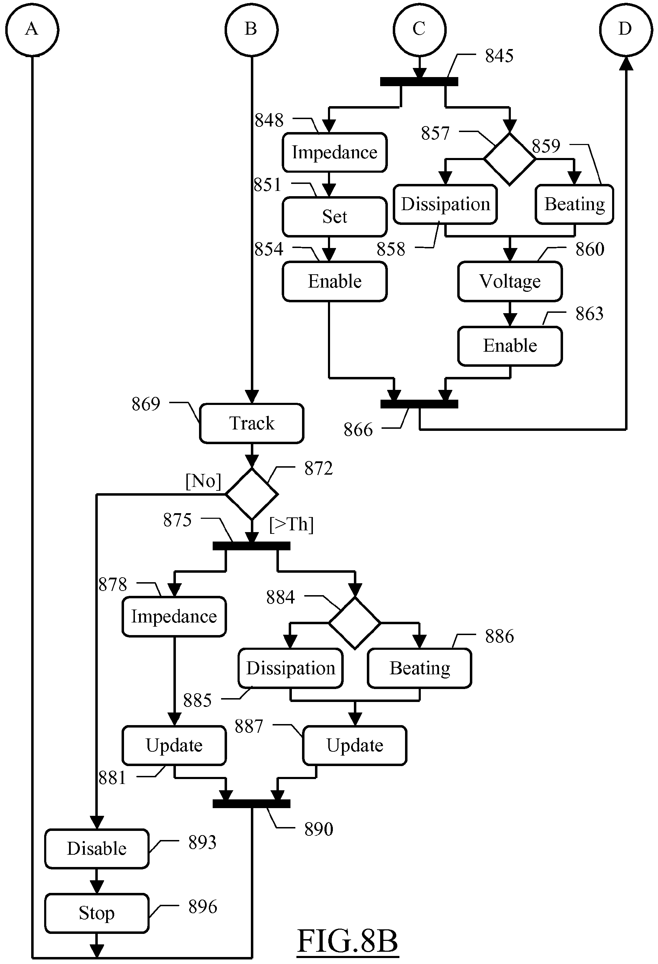

Moving to the FIG.8A-FIG.8B, an activity diagram is shown describing the flow of activities relating to an implementation of the solution according to an embodiment of the present disclosure.

Particularly, the diagram represents an exemplary process that may be used to reduce the brake squeals with a method 800. The flow of activity begins at the black start circle 803 as soon as the vehicle is started. A replacement counter is verified at block 806; the replacement counter indicates a suggested time for replacing the pads of the brake (which replacement counter is set according to the expected life time of the pads whenever they are replaced, for example, manually as already done for other deadlines such as servicing, tyre rotation and replacement). If the replacement counter indicates that the pads are not to be replaced yet, a loop is performed continually. For the sake of simplicity, the case of a single sensor is taken into account. The loop begins at block 809 wherein the sensor is enabled (by opening the corresponding switch). Continuing to block 812, the vibration signal representative of the vibration induced on the sensor, suitably conditioned and anti-aliasing filtered, is sampled; the system is designed so as to ensure that the vibration signal is sampled at a rate substantially higher than the typical frequencies of the brake squeals (for example, at about 20-100 kHz). Each sample is added to a shift register that implements a First-In-First-Out (FIFO) buffer; the buffer has a size providing enough information to perform a meaningful analysis of the vibration signal (for example, corresponding to an analysis period of 1-10 sec.). A test is performed at block 815 to verify whether the buffer has been completely filled in (after a first analysis period defining a corresponding transient period from the start of the vehicle). If not, the flow of activity returns to the block 809 immediately, so as to acquire a next sample. Conversely, as soon as the buffer has been filled in after the transient period, the flow of activity descends into block 818 wherein the (discrete) spectrum of the vibration signal is calculated from the samples in the buffer. For example, the spectrum may be a power spectrum averaged with time-windowing techniques (for example, based on the Welch's algorithm). For this purpose, the buffer is logically split into multiple slots of the same size, corresponding to a chosen time window (for example, 10 slots each one for 0.1-1 [s]). The Discrete Fourier Transform (DFT) is calculated from the samples of each slot by applying the Fast Fourier Transform (FFT). The coefficients of the transforms representing the amplitude of its frequency components are squared (to obtain their power) are then averaged into a total transform. In this way, the obtained spectrum magnifies the differences among the frequency components of the vibration signal (thanks to the squaring operation) and it reduces a background noise (thanks to the averaging operation).

A test is then made at block 821 to verify whether a corrective action by a corresponding actuator (in case of dissipative techniques) or by all the actuators (in case of harvesting/beating techniques) is in progress for reducing a brake squeal (for example, as indicated by a squeal flag). If not (i.e., the squeal flag is deasserted), a loop is performed for scanning the spectrum to search a frequency peak that may be due to a brake squeal. The scanning is limited to a squeal (frequency) band corresponding to the typical frequencies of the brake squeals (for example, in the range of 0,5-30 [kHz], preferably 1-20 [kHz], and still more preferably 3-15 [kHz]); advantageously, the spectrum is scanned moving downwards (so as to give priority to the frequency peaks at higher frequencies, which are more critical due to the higher energy of the phenomenon). Particularly, the loop begins at block 824, wherein a (current) frequency component of the spectrum (starting from an upper boundary of the squeal band) is taken into account. Continuing to block 827, the intensity of this frequency component is compared at block 830 with a pre-defined intensity threshold (for example, 5-30 W, preferably 10-20 W and still more preferably 13-18 W, such as 15 W when the intensity is expressed as power). If the intensity is strictly higher than the intensity threshold (meaning that a frequency peak has been found), a width index is calculated at block 833 for measuring a width of this frequency peak (for example, as defined by the extent or the area of the spectrum around the frequency peak at a half of its intensity). The width index is compared at block 836 with a pre-defined width threshold (for example, when it is expressed by the extent of the frequency peak, of 10-100 [Hz], preferably 30-80 [Hz], and still more preferably 40-70 [Hz], such as 50 [Hz]). If the width index is higher than or equal to the width threshold (meaning that the frequency peak is large), the flow of activity passes to block 839; the same point is also reached from the block 830 when the intensity of the frequency component is lower than or equal to the intensity threshold (meaning that it does not define a frequency peak). In both cases, a test is made to verify whether a lower boundary of the squeal band has been reached. If not, the flow of activity returns to the block 824 to process a next frequency component of the spectrum. Conversely, when the lower boundary of the squeal band has been reached without finding any (significant) frequency peak, the flow of activity returns to the block 809, so as to acquire a next sample (since to squeal brake has not been detected).

With reference again to the block 836, when the width index is strictly higher than the width threshold (meaning that the frequency peak is narrow), the brake squeal is detected at block 842; in response thereto, the squeal flag is asserted and the frequency of the frequency peak is saved into a variable indicating the squeal frequency.

The flow of activity then forks at the synchronization bar 845 into two branches that are executed alternatively according to a configuration of the system. Particularly, a first branch consisting of blocks 848-854 is executed when the reduction of the brake squeal is based on harvesting techniques and a second branch consisting of blocks 857-863 is executed when the reduction of the brake squeal is based on dissipative/beating techniques.

Considering in particular the block 848 (harvesting techniques), the impedance matching the squeal frequency is determined (for example, by extracting it from a pre-defined table storing a series of values of the matching impedance for corresponding ranges of values of the squeal frequency). Continuing to block 851, the matching unit of all the actuators (in the harvesting circuit) are configured so as to set their impedance according to the matching impedance (for example, by selectively connecting basic resistors/capacitors in series and/or in parallel so as to approximate the matching impedance as far as possible). The actuators are then enabled at block 854 (by opening the corresponding switches), so as to start converting the mechanical energy of their vibrations (corresponding to the brake squeal) into electrical energy that is supplied to the load of the harvesting circuit (which mechanical energy extracted from the structure damps its vibration and then the brake squeal).

With reference instead to block 857 (dissipative/beating techniques), the flow of activity branches again according to the type of corrective action. Particularly, when the corrective action is based on dissipative techniques, the induced vibration to be caused by the actuator corresponding to the sensor (so as to apply the target vibration to the brake) is calculated at block 858 (from the vibration signal and the frequency response of the structure, for example, extracted from a pre-defined table). Conversely, when the corrective action is based on beating techniques, the beating frequency corresponding to the squeal frequency is determined at block 859 (for example, by increasing or decreasing it by a pre-defined offset, such as 5-50 [Hz], preferably 10-40 [Hz], and still more preferably 20-30 [Hz], such as 25 [Hz]). The flow of activity merges at block 860 (from either the block 858 or the block 859), wherein a driving voltage corresponding to the induced voltage is applied to the actuator corresponding to the sensor or a driving voltage corresponding to the beating frequency is applied to all the actuators. Each relevant actuator is then enabled at block 863 (again by opening the corresponding switch), so as to start vibrating accordingly (to reduce or to mystify the brake squeal, respectively).

The above-described two branches joint at the further synchronization bar 866 (from either the block 854 or the block 863). The flow of activity then returns to the block 809 for repeating the same operations.

Referring back to the block 821, if the corrective action is in progress (*i.e.,* the squeal flag is asserted), the squeal frequency is tracked at block 869 around its current value (since it is substantially constant, independently of the speed of the vehicle that is braking). For example, a peak-holding method may be applied, wherein a search (frequency) interval centred around the squeal frequency (for example, +/-20-200 [Hz], preferably +/-60-160 [Hz], and still more preferably +/-80-140 [Hz], such as +/-100 [Hz]) is scanned by holding a maximum intensity of the spectrum (for example, a search interval 1.4-1.6 [kHz] for a squeal frequency of 1.5 [kHz]). The frequency providing the maximum intensity in the search interval is saved as the new value of the squeal frequency (in the corresponding variable) so as to override its previous value. The intensity of the (new) squeal frequency is then compared at block 872 with the same intensity threshold as above. If the intensity is strictly higher than the intensity threshold (meaning that the brake squeal is still present), the flow of activity forks at the synchronization bar 875 into two branches that are executed alternatively according to the configuration of the system. Particularly, a first branch consisting of blocks 878-881 is executed when the reduction of the brake squeal is based on harvesting techniques and a second branch consisting of blocks 884-887 is executed when the reduction of the brake squeal is based on dissipative/beating techniques.

Considering in particular the block 878 (harvesting techniques), a new value of the harvesting impedance (matching the new value of the squeal frequency) is determined as above. Continuing to block 881, the matching units of the actuators are configured accordingly.

With reference instead to block 884 (dissipative/beating techniques), the flow of activity branches again according to the type of corrective action. Particularly, when the corrective action is based on dissipative techniques, the induced vibration to be caused by the actuator (corresponding to the new value of the squeal frequency) is calculated as above at block 885. Conversely, when the corrective action is based on beating techniques, the beating frequency (corresponding to the new value of the squeal frequency) is determined at block 886. The flow of activity merges at block 887 (from either the block 885 or the block 886), wherein the driving voltage corresponding to the induced voltage or to the beating frequency is updated accordingly.

The above-described two branches joint at the further synchronization bar 890 (from either the block 881 or the block 887). The flow of activity then returns to the block 809 for repeating the same operations.

Referring back to the block 872, when the intensity of the squeal frequency is lower than or equal to the intensity threshold (meaning that the brake squeal has been substantially removed), each relevant actuator (*i.e.,* all the actuators for the harvesting/beating technique or the corresponding actuator for the dissipative techniques) is disabled at block 893 (by opening the corresponding switches). Continuing to block 896, when the reduction of the brake squeal is based on dissipative/beating techniques the generation of the corresponding induced vibration is stopped. The flow of activity then returns to the block 809 for repeating the same operations.

Returning instead to the block 806, when the replacement counter indicates that the pads are to be replaced (since they have reached their expected life time), the method 800 directly ends to the concentric white/black stop circles 899 without performing any operation. In this way, it is possible to avoid concealing brake squeals that occur naturally or are purposely induced when the pads are worn out and should be replaced as soon as possible (in order to prevent damaging the disk).

Similar considerations apply with multiple sensors. In this case, when the reduction of the brake squeal is based on harvesting/beating techniques, the sensors are processed in succession and all the actuators are enabled as soon as the brake condition is detected by any sensor (until it is not detected any longer by the same sensor); when the reduction of the brake squeal is based on dissipative techniques, instead, the pairs sensor/actuator are processed in succession independently (with each actuator that is enabled while the brake condition is detected by the corresponding sensor).

Modifications

Naturally, in order to satisfy local and specific requirements, a person skilled in the art may apply many logical and/or physical modifications and alterations to the present disclosure. More specifically, although this disclosure has been described with a certain degree of particularity with reference to one or more embodiments thereof, it should be understood that various omissions, substitutions and changes in the form and details as well as other embodiments are possible. Particularly, different embodiments of the present disclosure may even be practiced without the specific details (such as the numerical values) set forth in the preceding description to provide a more thorough understanding thereof; conversely, well-known features may have been omitted or simplified in order not to obscure the description with unnecessary particulars. Moreover, it is expressly intended that specific elements and/or method steps described in connection with any embodiment of the present disclosure may be incorporated in any other embodiment as a matter of general design choice. In any case, ordinal or other qualifiers are merely used as labels to distinguish elements with the same name but do not by themselves connote any priority, precedence or order. Moreover, the terms include, comprise, have, contain and involve (and any forms thereof) should be intended with an open, non-exhaustive meaning (*i.e.,* not limited to the recited items), the terms based on, dependent on, according to, function of (and any forms thereof) should be intended as a non-exclusive relationship (*i.e.,* with possible further variables involved), the term a/an should be intended as one or more items (unless expressly indicated otherwise), and the term means for (or any means-plus-function formulation) should be intended as any entity or structure suitable for carrying out the relevant function.

For example, an embodiment provides a method for reducing a brake squeal caused by a wheel brake of a vehicle. The method comprises the following steps. At least one vibration signal indicative of a vibration of the brake is measured. Said at least one vibration signal is monitored to detect at least one squeal condition indicative of the brake squeal. At least one corrective action for reducing the brake squeal is triggered in response to the detection of said at least one brake condition.

However, the method may be applied to any wheel brake of any vehicle (see below). The brake squeal may be of any type (for example, as defined by its frequency and/or intensity) and it may occur in any other condition (for example, speed, deceleration, temperature, entire stop of the vehicle or only its start, middle and/or end). Any number (one or more) of vibration signals may be measured, and they may be monitored to detect any number (one or more) of squeal conditions (one for each vibration signal or for all the vibration signals); likewise, any number (one or more) of corrective actions may be triggered (for example, one for each squeal condition or for all the squeal conditions). In any case, the vibration signals may be measured and monitored in any way, and any corrective actions may be trigged in response to any detection of the brake conditions (see below).

In an embodiment, said triggering at least one corrective action comprises setting said at least one corrective action according to said at least one squeal condition.

However, any number (one or more) of corrective actions may be set according to any number (one or more) of squeal conditions (for example, one for each squeal condition or for all the squeal conditions); moreover, the corrective actions may be set in any way according to the squeal conditions (see below). In any case, a basic implementation wherein the corrective actions are pre-defined and independent of the brake squeals that are detected at run-time is not excluded.

In an embodiment, said monitoring said at least one vibration signal comprises determining a squeal frequency corresponding to the brake squeal of each squeal condition; moreover, said setting said at least one corrective action comprises setting each corrective action according to the squeal frequency of a corresponding squeal condition.

However, the squeal frequency may be determined in any way and/or the corrective action may be set according to the squeal frequency in any way (see below). In any case, different, additional or alternative characteristics of each brake squeal (based on its analysis either in the frequency domain or in the time domain) may be determined and used to set the corrective action (for example, intensity, phase).

In an embodiment, said monitoring said at least one vibration signal comprises the following steps for each vibration signal. A frequency spectrum of the vibration signal is calculated. The squeal condition is detected in response to a frequency peak of the frequency spectrum; the frequency peak belongs to a squeal frequency band, it has intensity higher than an intensity threshold and it has a width lower than a width threshold. The squeal frequency is set according to the frequency peak.

However, the frequency spectrum may be of any type (for example, based on power or amplitude of the frequency components, either discrete or continuous) and it may be calculated with any spectral density estimation techniques (for example, based on Laplace's transform). The spectrum may be scanned in any way (for example, moving upwards). Moreover, the intensity threshold and the width threshold may have any value (expressed in any units of measurement); in any case, the high and narrow frequency peaks in the squeal band may be discriminated in any way (for example, with digital filters). More generally, the frequency peaks may be detected in any way (for example, fitting the spectrum by a model function and then calculating them analytically). The squeal frequency may be set in any way according to the frequency peak (for example, to a median value of the intensities in a frequency interval around it). Said triggering at least one corrective action comprises enabling at least one harvesting circuit for harvesting energy from the vibration of the brake.

However, any number (one or more) of harvesting circuits may be provided (for example, one for each corrective action or for all of them); moreover, each harvesting circuit may be of any type (for example, without any rectifier and/or storage unit).

In an embodiment, said triggering at least one corrective action comprises causing at least one further vibration of the brake.

However, any number (one or more) of further vibrations may be caused (for example, one for each corrective action or for all of them). Moreover, each further vibration may be of any type (in terms of intensity, frequency and phase). For example, when the further vibration is based on beating techniques, the beating acoustic wave may be of any type, such as based on isochronic tones, monoaural or binaural beats. Likewise, when the further vibration is based on dissipative techniques, it may be calculated in any other way (for example, with proportional, integral and/or derivative control techniques).

In an embodiment, said enabling at least one harvesting circuit comprises setting a matching impedance of each harvesting circuit according to the corresponding squeal frequency. In addition or in alternative, said causing at least one further vibration of the brake comprises setting a frequency of each further vibration according to the corresponding squeal frequency.

However, the matching impedance may of any type (for example, based on one or more values among resistance, capacitance and inductance) and it may be set in any way according to the squeal frequency (for example, in a discrete and/or continuous way). Likewise, the frequency of the further vibration may be set in any way according to the squeal frequency (for example, with a difference between the beating frequency and the squeal frequency equal to a pre-defined percentage thereof). In any case, a basic implementation with a fixed impedance (at least in part) and/or with a fixed frequency of the further vibration is not excluded.

More generally, only parts of the above-mentioned corrective actions, or different, additional or alternative corrective actions may be implemented. For example, the actuators may be caused to vibrate so as to interfere with the vibration that caused the brake squeal in a destructive way, *i.e.,* at the same frequency but out of phase (even if this requires the injection of an amount of energy comparable to the one corresponding to the brake squeal).

In an embodiment, the method further comprises selectively enabling said measuring at least one vibration signal, monitoring said at least one vibration signal and triggering at least one corrective action according to an indication of an aging of a brake lining of the brake.

However, the aging may be indicated in any way (for example, according to the kilometres covered by the vehicle as indicated by its odometer) and it may relate to any consumable part of the brake (for example, pads, shoes); moreover, the disabling of the above-described reduction of the brake squeal may be controlled actively (for example, in response to a signal provided by a sensor measuring a wearing of the brake lining). In any case, a simplified implementation wherein the reduction of the brake squeal is always enabled is not excluded.

In an embodiment, the method further comprises the following steps. Said at least one vibration signal is monitored to track each squeal frequency after the detection of the corresponding squeal condition. Each corrective action is updated according to the corresponding squeal frequency.

However, the squeal frequency may be tracked in any way (for example, according to a weighted average around its original value) and the corrective action may be updated in any way according to the variation of the squeal frequency (for example, with a hysteresis). In any case, a basic implementation wherein the corrective action remains fixed after the detection of the squeal frequency (without any tracking thereof) is not excluded.

In an embodiment, the method further comprises the following steps. Said at least one vibration signal is monitored to detect an absence of each squeal condition after the detection thereof. Each corrective action is stopped in response to the detection of the absence of the corresponding squeal condition.

However, the absence of the squeal condition may be detected in any way (for example, when an integral of the spectrum around the peak frequency falls below a pre-defined percentage of its original value) and the corrective action may be stopped in any way in response thereto (for example, with a progressive fading of the corrective action). In any case, a basic open-loop implementation wherein the corrective action is maintained for a pre-defined time (without any feedback control of the squeal condition) is not excluded.

In an embodiment, said measuring at least one vibration signal comprises measuring each vibration signal by means of a piezoelectric sensor; in addition or in alternative, said triggering at least one corrective action comprises enabling a piezoelectric actuator for implementing each corrective action.

However, the piezoelectric sensors and the piezoelectric actuators may be of any type, shape and size; moreover, the piezoelectric sensors and/or actuators may work in any way (for example, based on normal-to-surface deformation or on curvature). In addition, nothing prevents having piezoelectric modules that are used interchangeably both as sensors and as actuators. In any case, the sensors/actuators may be implemented in any other way (for example, with accelerometers or microphones for the sensors and with magnetostrictive or inductive plates for the actuators).

In an embodiment, said measuring at least one vibration signal comprises measuring each vibration signal by means of a sensor arranged on a suspension of the vehicle or on a calliper of the brake; in addition or in alternative, said triggering at least one corrective action comprises enabling an actuator arranged on the suspension of the vehicle or on the calliper of the brake for implementing each corrective action.

However, the sensors and the actuators may be in any number (even different to each other) and in any position (for example, on the shock-absorber), even independently for the actuators and the sensors (for example, only on the suspension, only on the calliper or on both of them). In any case, other arrangements of the sensors/actuators (for example, on the chassis) are not excluded.

Generally, similar considerations apply if the same solution is implemented with an equivalent method (by using similar steps with the same functions of more steps or portions thereof, removing some steps being non-essential, or adding further optional steps); moreover, the steps may be performed in a different order, concurrently or in an interleaved way (at least in part).

A further embodiment provides a software program configured for causing a control unit to perform the above-mentioned method when the software program is executed on the control unit.

However, the software program may be implemented as a stand-alone module, as a plug-in for a control program of a pre-existing control unit, or in a dedicated control unit. In any case, similar considerations apply if the software program is structured in a different way, or if additional modules or functions are provided. The software program may take any form suitable to be used by any data-processing or computing system or in connection therewith (for example, within a virtual machine), thereby configuring the system to perform the desired operations; particularly, the program may be in the form of external or resident software, firmware, or microcode (either in object code or in source code - for example, to be compiled or interpreted). Moreover, it is possible to provide the program on any computer-usable medium (and particularly as an article of manufacture on a non-transitory medium); the medium may be any element suitable to contain, store, communicate, propagate, or transfer the program. For example, the medium may be of the electronic, magnetic, optical, electromagnetic, infrared, or semiconductor type; examples of such medium are fixed disks (where the program may be pre-loaded), removable disks, tapes, cards, wires, fibbers, wireless connections, networks, broadcast waves, and the like. In any case, the solution according to an embodiment of the present disclosure lends itself to be implemented even with a hardware structure (for example, integrated in a chip of semiconductor material), or with a combination of software and hardware suitably programmed or otherwise configured.

A further embodiment provides a system for reducing a brake squeal caused by a wheel brake of a vehicle; the system comprising means configured for performing the above-described method.

However, the control unit may have another structure or it may comprise similar elements (such as cache memories); moreover, it is possible to replace the control unit with one or more code execution entities of any type (for example, a small computer controlling the whole vehicle).

A further embodiment provides a vehicle comprising at least one wheel brake and at least one system as described above for reducing a brake squeal caused by said at least one brake.

However, the vehicle may be of any type (for example, a car, a motorbike, a bicycle, a truck, a train); the vehicle may comprise any number (one or more) of wheel brakes of any type (for example, of the disk or drum type).

Generally, similar considerations apply if the system and the vehicle each one has a different structure or comprises equivalent components (for example, of different materials), or it has other operative characteristics. In any case, every component thereof may be separated into more elements, or two or more components may be combined together into a single element; moreover, each component may be replicated to support the execution of the corresponding operations in parallel. Moreover, unless specified otherwise, any interaction between different components generally does not need to be continuous, and it may be either direct or indirect through one or more intermediaries.

**Claims**

1.  A method (800) for reducing a brake squeal caused by a wheel brake of a vehicle, the method comprising:

    measuring (809-815) at least one vibration signal indicative of a vibration of the brake,

monitoring (818-842) said at least one vibration signal to detect at least one squeal condition indicative of the brake squeal, and

triggering (845-866) at least one corrective action for reducing the brake squeal in response to the detection of said at least one brake condition

**characterized in that**

said triggering (845-866) at least one corrective action comprises:
enabling (848-854) at least one harvesting circuit for harvesting energy from the vibration of the brake.

2. The method (800) according to claim 1, wherein said triggering (845-866) at least one corrective action comprises:
setting (848;858;859) said at least one corrective action according to said at least one squeal condition.

3. The method (800) according to claim 2, wherein said monitoring (818-842) said at least one vibration signal comprises:
determining (824-839) a squeal frequency corresponding to the brake squeal of each squeal condition,
and wherein said setting (848;858;859) said at least one corrective action comprises:
setting (848;858;859) each corrective action according to the squeal frequency of a corresponding squeal condition.

4. The method (800) according to claim 3, wherein said monitoring (818-842) said at least one vibration signal comprises, for each vibration signal:

calculating (818) a frequency spectrum of the vibration signal,
detecting (824-839) the squeal condition in response to a frequency peak of the frequency spectrum, the frequency peak belonging to a squeal frequency band, having an intensity higher than an intensity threshold and having a width lower than a width threshold, and
setting (842) the squeal frequency according to the frequency peak.

5. The method (800) according to claim 3 or 4, wherein said enabling (848-854) at least one harvesting circuit comprises:
setting (848) a matching impedance of each harvesting circuit according to the corresponding squeal frequency.

6. The method (800) according to claim 5, wherein said setting (848) a matching impedance of each harvesting circuit comprises:
setting (848) the matching impedance of each harvesting circuit to have a resonance frequency of the harvesting circuit equal to the corresponding squeal frequency.

7. The method (800) according to any claim from 3 to 6, wherein said triggering (845-866) at least one corrective action comprises:
causing (857-863) at least one induced vibration of the brake for damping the vibration of the brake or a beating vibration of the vibration of the brake according to the corresponding squeal frequency.

8. The method (800) according to any claim from 3 to 7, further comprising:

monitoring (869-872) said at least one vibration signal to track each squeal frequency after the detection of the corresponding squeal condition, and
updating (875-890) each corrective action according to the corresponding squeal frequency.

9. The method (800) according to any claim from 1 to 8, further comprising:
selectively enabling (806) said measuring (809-815) at least one vibration signal, monitoring (818-842) said at least one vibration signal and triggering (845-866) at least one corrective action according to an indication of an aging of a brake lining of the brake.

10. The method (800) according to any claim from 1 to 9, further comprising:

monitoring (869-872) said at least one vibration signal to detect an absence of each squeal condition after the detection thereof, and
stopping (893-896) each corrective action in response to the detection of the absence of the corresponding squeal condition.

11. The method (800) according to any claim from 1 to 10, wherein said measuring (809-815) at least one vibration signal comprises:

measuring (812) each vibration signal by means of a piezoelectric sensor, and/or wherein said triggering (845-866) at least one corrective action comprises:
enabling (854;863) a piezoelectric actuator for implementing each corrective action.

12. The method (800) according to any claim from 1 to 11, wherein said measuring (809-815) at least one vibration signal comprises:
measuring (812) each vibration signal by means of a sensor arranged on a suspension of the vehicle or on a calliper of the brake,
and/or wherein said triggering (845-866) at least one corrective action comprises:
enabling (854;863) an actuator arranged on the suspension of the vehicle or on the calliper of the brake for implementing each corrective action.

13. A software program (700) configured for causing a control unit (524) to perform the method (800) according to any claim from 1 to 12 when the software program is executed on the control unit.

14. A system (500;600) for reducing a brake squeal caused by a wheel brake of a vehicle, the system comprising means (700) configured for performing the method (800) according to any claim from 1 to 12.

15. A vehicle comprising at least one wheel brake (135) and at least one system (500;600) according to claim 14 for reducing a brake squeal caused by said at least one brake.


**Patentansprüche**

1. Verfahren (800) zum Reduzieren von Bremsenquietschen, das durch eine Radbremse eines Fahrzeugs verursacht wird, wobei das Verfahren folgende Schritte aufweist:

Messen (809-815) von mindestens einem Schwingungssignal, das eine Schwingung der Bremse anzeigt,
Überwachen (818-842) des mindestens einen Schwingungssignals zum Detektieren vom mindestens einem Quietschzustand, der das Bremsenquietschen anzeigt, und
Auslösen (845-866) von mindestens einer Korrekturmaßnahme zum Reduzieren des Bremsenquietschens in Reaktion auf die Detektion des mindestens einen Bremszustands,
**dadurch gekennzeichnet, dass** das Auslösen (845-866) von mindestens einer Korrekturmaßnahme beinhaltet:
Aktivieren (848-854) von mindestens einer Harvesting-Schaltung zum Gewinnen von Energie aus der Schwingung der Bremse.

2. Verfahren (800) nach Anspruch 1,
wobei das Auslösen (845-866) von mindestens einer Korrekturmaßnahme beinhaltet:
Vorgeben (848; 858; 859) der mindestens einen Korrekturmaßnahme in Abhängigkeit von dem mindestens einen Quietschzustand.

3. Verfahren (800) nach Anspruch 2,
wobei das Überwachen (818-842) des mindestens einen Schwingungssignals beinhaltet:

Bestimmen (824-839) einer Quietschfrequenz, die dem Bremsenquietschen des jeweiligen Quietschzustands entspricht, und
wobei das Vorgeben (848; 858; 859) der mindestens eine Korrekturmaßnahme beinhaltet:
Vorgeben (848; 858; 859) der jeweiligen Korrekturmaßnahme in Abhängigkeit von der Quietschfrequenz eines entsprechenden Quietschzustands.

4. Verfahren (800) nach Anspruch 3,
wobei das Überwachen (818-842) des mindestens einen Schwingungssignals für jedes Schwingungssignal beinhaltet:

Berechnen (818) eines Frequenzspektrums des Schwingungssignals,
Detektieren (824-839) des Quietschzustands in Reaktion auf eine Frequenzspitze des Frequenzspektrums, wobei die Frequenzspitze zu einem Quietschfrequenzband gehört, das eine Intensität aufweist, die höher als eine Intensitätsschwelle ist, und eine Breite aufweist, die geringer als eine Breitenschwelle ist, und Vorgeben (842) der Quietschfrequenz (842) in Abhängigkeit von der Frequenzspitze.

5. Verfahren (800) nach Anspruch 3 oder 4,
wobei das Aktivieren (845-866) von mindestens einer Harvesting-Schaltung beinhaltet:
Vorgeben (848) einer Anpassungsimpedanz von jeder Harvesting-Schaltung in Abhängigkeit von der entsprechenden Quietschfrequenz.

6. Verfahren (800) nach Anspruch 5,
wobei das Vorgeben (848) einer Anpassungsimpedanz von jeder Harvesting-Schaltung beinhaltet:
Vorgeben (848) der Anpassungsimpedanz jeder Harvesting-Schaltung derart, dass diese eine Schwingungsfrequenz der Harvesting-Schaltung gleich der entsprechenden Quietschfrequenz aufweist.

7. Verfahren (800) nach einem der Ansprüche 3 bis 6,
wobei das Auslösen (845-866) von mindestens einer Korrekturmaßnahme beinhaltet:
Veranlassen (857-863) von mindestens einer induzierten Schwingung der Bremse zum Dämpfen der Schwingung der Bremse oder einer Pulsationsschwingung der Schwingung der Bremse in Abhängigkeit von der entsprechenden Quietschfrequenz.

8. Verfahren (800) nach einem der Ansprüche 3 bis 7, das ferner beinhaltet:

Überwachen (869-872) des mindestens einen Schwingungssignals zum ausfindig Machen der jeweiligen Quietschfrequenz nach der Detektion des entsprechenden Quietschzustands, und

Aktualisieren (875-890) der jeweiligen Korrekturmaßnahme in Abhängigkeit von der entsprechenden Quietschfrequenz.

9. Verfahren (800) nach einem der Ansprüche 1 bis 8, das ferner beinhaltet:
selektives Aktivieren (806) der Messung (809-815) des mindestens einen Schwingungssignals, Überwachen (818-842) des mindestens einen Schwingungssignals und Auslösen (845-866) der mindestens einen Korrekturmaßnahme in Abhängigkeit von einer Anzeige einer Alterung eines Bremsbelags der Bremse.

10. Verfahren (800) nach einem der Ansprüche 1 bis 9, das ferner beinhaltet:

Überwachen (869-872) des mindestens einen Schwingungssignals, um ein Nichtvorhandensein eines jeweiligen Quietschzustands nach dessen Detektion festzustellen, und

Beenden (893-896) der jeweiligen Korrekturmaßnahme in Reaktion auf die Detektion des Nichtvorhandenseins des entsprechenden Quietschzustands.

11. Verfahren (800) nach einem der Ansprüche 1 bis 10,
wobei das Messen (809-815) von mindestens einem Schwingungssignal beinhaltet:

Messen (812) des jeweiligen Schwingungssignals mittels eines piezoelektrischen Sensors,
und/oder wobei das Auslösen (845-866) von mindestens eine Korrekturmaßnahme beinhaltet:
Aktivieren (854; 863) eines piezoelektrischen Aktuators zum Implementieren der jeweiligen Korrekturmaßnahme.

12. Verfahren (800) nach einem der Ansprüche 1 bis 11,
wobei das Messen (809-815) von mindestens einem Schwingungssignal beinhaltet:

Messen (812) des jeweiligen Schwingungssignals mittels eines Sensors, der an einer Aufhängung des Fahrzeugs oder an einem Bremssattel der Bremse angeordnet ist,
und/oder wobei das Auslösen (845-866) von mindestens einer Korrekturmaßnahme beinhaltet:
Aktivieren (854; 863) eines an der Aufhängung des Fahrzeugs oder an dem Bremssattel der Bremse angeordneten Aktuators zum Implementieren der jeweiligen Korrekturmaßnahme.

13. Softwareprogramm (700), das konfiguriert ist, um zu veranlassen, dass eine Steuereinheit (524) das Verfahren (800) nach einem der Ansprüche 1 bis 12 ausführt, wenn das Softwareprogramm auf der Steuereinheit ausgeführt wird.

14. System (500; 600) zum Reduzieren von Bremsenquietschen, das durch eine Radbremse eines Fahrzeugs verursacht wird, wobei das System eine Einrichtung (700) aufweist, die zum Durchführen des Verfahrens (800) nach einem der Ansprüche 1 bis 12 ausgebildet ist.

15. Fahrzeug mit mindestens einer Radbremse (135) und mindestens einem System (500; 600) nach Anspruch 14 zum Reduzieren von Bremsenquietschen, das durch die mindestens eine Bremse verursacht wird.

**Revendications**

1. Procédé (800) pour réduire un crissement de frein provoqué par un frein de roue d'un véhicule, le procédé comprenant :

   la mesure (809-815) d'au moins un signal de vibration indicateur d'une vibration du frein,
   la surveillance (818-842) dudit au moins un signal de vibration pour détecter au moins une condition de crissement indicatrice du crissement de frein, et
   le déclenchement (845-866) d'au moins une action correctrice pour réduire le crissement de frein en réponse à la détection de ladite au moins une condition de freinage.
   **caractérisé en ce que**
   ledit déclenchement (845-866) d'au moins une action correctrice comprend :
   l'activation (848-854) d'au moins un circuit de récupération pour récupérer l'énergie issue de la vibration du frein.

2. Procédé (800) selon la revendication 1, dans lequel ledit déclenchement (845-866) d'au moins une action correctrice comprend :
   le réglage (848 ; 858 ; 859) de ladite au moins une action correctrice en fonction de ladite au moins une condition de crissement.

3. Procédé (800) selon la revendication 2, dans lequel ladite surveillance (818-842) dudit au moins un signal de vibration comprend :

   la détermination (824-839) d'une fréquence de crissement correspondant au crissement de frein dans chaque condition de crissement,
   et dans lequel ledit réglage (848 ; 858 ; 859) de ladite au moins une action correctrice comprend :
   le réglage (848 ; 858 ; 859) de chaque action correctrice en fonction de la fréquence de crissement d'une condition de crissement correspondante.

4. Procédé (800) selon la revendication 3, dans lequel ladite surveillance (818-842) dudit au moins un signal de vibration comprend, pour chaque signal de vibration :

   le calcul (818) d'un spectre fréquentiel du signal de vibration,
   la détection (824-839) de la condition de crissement en réponse à un pic de fréquence du spectre fréquentiel, le pic de fréquence appartenant à une bande de fréquences de crissement, ayant une intensité supérieure à un seuil d'intensité et ayant une largeur inférieure à un seuil de largeur, et
   le réglage (842) de la fréquence de crissement en fonction du pic de fréquence.

5. Procédé (800) selon la revendication 3 ou 4, dans lequel ladite activation (848-854) d'au moins un circuit de récupération comprend :
   le réglage (848) d'une impédance d'adaptation de chaque circuit de récupération en fonction de la fréquence de crissement correspondante.

6. Procédé (800) selon la revendication 5, dans lequel ledit réglage d'une impédance d'adaptation de chaque circuit de récupération (848) comprend :
   Le réglage (848) de l'impédance d'adaptation de chaque circuit de récupération pour obtenir une fréquence de résonance du circuit de récupération égale à la fréquence de crissement correspondante.

7. Procédé (800) selon l'une quelconque des revendications 3 à 6, dans lequel ledit déclenchement (845-866) d'au moins une action correctrice comprend :
le fait de provoquer (857-863) au moins une vibration induite du frein pour amortir la vibration du frein ou une vibration battante de la vibration du frein en fonction de la fréquence de crissement correspondante.

8. Procédé (800) selon l'une quelconque des revendications 3 à 7, comprenant en outre :

la surveillance (869-872) dudit au moins un signal de vibration pour suivre chaque fréquence de crissement après la détection de la condition de crissement correspondante, et
la mise à jour (875-890) de chaque action correctrice en fonction de la fréquence de crissement correspondante.

9. Procédé (800) selon l'une quelconque des revendications 1 à 8, comprenant en outre :
l'activation sélective (806) de ladite mesure (809-815) d'au moins un signal de vibration, la surveillance (818-842) dudit au moins un signal de vibration et le déclenchement (845-866) d'au moins une action correctrice en fonction d'une indication d'un vieillissement d'une garniture de frein du frein.

10. Procédé (800) selon l'une quelconque des revendications 1 à 9, comprenant en outre : la surveillance (869-872) dudit au moins un signal de vibration pour détecter une absence de chaque condition de crissement après la détection de celle-ci, et
l'arrêt (893-896) de chaque action correctrice en réponse à la détection de l'absence de la condition de crissement correspondante.

11. Procédé (800) selon l'une quelconque des revendications 1 à 10, dans lequel ladite mesure (809-815) d'au moins un signal de vibration comprend :
la mesure (812) de chaque signal de vibration au moyen d'un capteur piézoélectrique, et/ou dans lequel ledit déclenchement (845-866) d'au moins une action correctrice comprend :
l'activation (854 ; 863) d'un actionneur piézoélectrique pour mettre en oeuvre chaque action correctrice.

12. Procédé (800) selon l'une quelconque des revendications 1 à 11, dans lequel ladite mesure (809-815) d'au moins un signal de vibration comprend :

la mesure (812) de chaque signal de vibration au moyen d'un capteur disposé sur une suspension du véhicule ou sur un étrier du frein,
et/ou dans lequel ledit déclenchement (845-866) d'au moins une action correctrice comprend :
l'activation (854 ; 863) d'un actionneur agencé sur la suspension du véhicule ou sur l'étrier du frein pour mettre en oeuvre chaque action correctrice.

13. Programme informatique (700) configuré pour provoquer la mise en oeuvre, par une unité de commande (524), du procédé (800) selon l'une quelconque des revendications 1 à 12, lorsque le programme informatique est exécuté par l'unité de commande.

14. Système (500 ; 600) pour réduire un crissement de frein provoqué par un frein de roue d'un véhicule, le système comprenant des moyens (700) configurés pour mettre en oeuvre le procédé (800) selon l'une quelconque des revendications 1 à 12.

15. Véhicule comprenant au moins un frein de roue (135) et au moins un système (500 ; 600) selon la revendication 14 pour réduire un crissement de frein provoqué par ledit au moins un frein.

**FIG.1**

FIG.2

EP 2 927 530 B1

FIG.3A

FIG.3B

FIG.3C

FIG.4

Power [mW]

Resistance [Ω]

400a 400b 400c 400d

**FIG.5**

**FIG.6**

705

Input
driver

710

Monitor

715

Detector

720

Configurations

725

Log

730

Corrector

735

Output
driver

700

## FIG.7

FIG.8A

FIG.8B

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0849484 A
- EP 0874173 A
- JP H10329681 A
- KR 20030009605 A
- US 2004174067 A

**Non-patent literature cited in the description**

- **M. TRICHES JR ; S. N. Y. GERGES ; R. JORDAN.** Reduction of squeal noise from disc brake systems using constrained layer damping. *Journal of the Brazilian Society of Mechanical Sciences and Engineering,* ISSN 1678-5878
- **J. BRAZ.** *Soc. Mech. Sci. & Eng.,* July 2004, vol. 26 (3
- *Energy Harvesting Technologies,* ISBN 978-0-387-76463-4